# FASCICULE DE BREVET EUROPEEN

(11) **EP 3 482 025 B1**
(45) Date de publication et mention de la délivrance du brevet: **19.02.2020**
(21) Numéro de dépôt: 17726135.1
(22) Date de dépôt: 04.05.2017
(51) Int. Cl.: E05D 1/02, E05F 1/12, H02G 15/113, H02G 15/117, H02G 3/04, H02G 3/14, B60R 16/023

(54) **ENSEMBLE DE CHARNIERE A BARRE DE TORSION RENFORCE**
SCHARNIERANORDNUNG MIT VERSTÄRKTEM DREHSTAB
HINGE ASSEMBLY WITH REINFORCED TORSION BAR

(30) Priorité: 06.07.2016 FR 1656470
(43) Date de publication de la demande: 15.05.2019
(73) Titulaire: A Raymond Et Cie, 38000 Grenoble (FR)
(72) Inventeur: SEDIVY, Jiri, 46605 Jablonec nad Nisou (CZ)
(74) Mandataire: Prugneau, Philippe
(86) Numéro de dépôt international: PCT/FR2017/051078
(87) Numéro de publication internationale: WO 2018/007694

(56) Documents cités:
- FR-A1- 2 982 304
- US-A- 3 250 585
- US-A- 5 828 005
- US-A1- 2015 366 113

## Description

### Domaine technique

La présente invention se rapporte au domaine des boitiers avec un couvercle à charnière destinés notamment à former des éléments de goulotte de câbles électriques pour réunir par exemple des faisceaux de câble au niveau du bloc moteur d'un véhicule automobile.

Plus particulièrement, l'invention concerne un ensemble de charnière monobloc à barre de torsion élastique comprenant un premier élément de charnière, un second élément de charnière et une barre de torsion qui s'étend axialement entre le premier élément de charnière et le second élément de charnière, la barre de torsion ayant deux extrémités raccordées au premier élément de charnière et le second élément de charnière présentant deux bras de sollicitation espacés l'un de l'autre selon la direction axiale qui sont solidaires en rotation à la barre de torsion.

### Technique antérieure

Dans l'industrie automobile, des éléments de goulotte thermoplastique sont souvent positionnés dans des conditions environnementales très difficiles, c'est-à-dire qu'ils sont soumis à la chaleur, aux carburants ou graisses, et sont parfois difficile d'accès.

Les éléments de goulotte comprennent généralement un boitier avec un couvercle à charnière et les charnières en plus d'être dans un environnement délétère subissent beaucoup de sollicitations mécaniques au cours du montage ou au cours du démontage lors de processus de maintenance du véhicule automobile.

Actuellement, les éléments de goulotte comprennent un boitier et un couvercle liés par une charnière très fine avec une géométrie particulière, qui permet de plier le couvercle sur le boitier dans une position de coïncidence entre le boitier et le couvercle.

Néanmoins, cette charnière fine ne résiste pas à la chaleur et aux autres contraintes et casse au pliage. Une solution est que pour la fabrication de ces éléments de goulotte, l'industriel utilise des matières plastiques très spécifiques par exemple chargées en fibre de verre de sorte à résister aux environnements cités précédemment.

Mais ces matières plastiques souvent très rigides ne permettent pas de palier correctement à la casse au cours du pliage.

Le document FR2982304 décrit un boitier avec un couvercle et une charnière à barre de torsion qui peut être fabriquée avec une matière plastique rigide. Néanmoins, en cas de casse de la charnière, il peut être difficile de rabattre et fermer le couvercle sur le boitier par manque de précision.

Lorsque la charnière est cassée, le couvercle peut aussi totalement se désolidariser du boitier de sorte qu'il peut être égaré.

Ainsi, avec les boitiers avec couvercle à charnière utilisés dans l'industrie automobile, en cas de casse de la charnière, les boitiers doivent être changés car ils deviennent la plupart du temps non réutilisables.

### Résumé de l'invention

Le but de l'invention est donc de proposer un autre ensemble de charnière afin de pallier les inconvénients indiqués plus haut.

A cet effet, l'invention a pour objet un ensemble de charnière monobloc à barre de torsion élastique comprenant un premier élément de charnière, un second élément de charnière et une barre de torsion qui s'étend axialement entre le premier élément de charnière et le second élément de charnière, la barre de torsion ayant deux extrémités raccordées au premier élément de charnière et le second élément de charnière présentant deux bras de sollicitation espacés l'un de l'autre selon la direction axiale qui sont solidaires en rotation à la barre de torsion, caractérisé en ce que le premier élément de charnière comprend un corps de palier qui s'étend entre les deux bras de sollicitation et qui est traversé par une partie médiane de la barre de torsion.

L'ensemble de charnière selon l'invention peut présenter les particularités suivantes :
- le corps de palier peut comprendre deux pattes à œillet espacées axialement l'une de l'autre entre les deux bras de sollicitation, la partie médiane de la barre de torsion tournant librement dans les deux pattes à œillet ;
- les deux pattes à œillet peuvent être raccordées l'une à l'autre par une nervure de renfort;
- le corps de palier peut comprendre une boucle de matière formant un U enroulé sur lui-même entre les bras de sollicitation pour former un canal dans lequel tourne librement la partie médiane de la barre de torsion
- la barre de torsion peut présenter dans sa partie médiane une section plus grande qu'à ses extrémités ;
- la partie médiane de la barre de torsion peut présenter un renflement en forme d'olive ;
- le corps de palier peut être formé d'une seule pièce avec la barre de torsion.

L'invention s'étend à un boitier avec un couvercle à charnière, caractérisé en ce que le boitier et le couvercle sont reliés par un ensemble de charnière selon l'invention.

L'idée à la base de l'invention est d'obtenir un boitier avec un couvercle à charnière réalisé en une seule pièce, avec une charnière intégrée au boitier et au couvercle, la charnière présentant une barre de torsion sur laquelle un corps de palier entoure la partie médiane de la charnière pour maintenir un positionnement relatif en rotation du couvercle par rapport au boîtier même quand la barre de torsion est cassée, par exemple à une de ses deux extrémités.

La barre de torsion est moulée en même temps qu'avec le corps de palier pour obtenir un élément de charnière monobloc renforcé plus résistant à des manipulations multiples.

### Présentation sommaire des dessins

La présente invention sera mieux comprise et d'autres avantages apparaîtront à la lecture de la description qui suit et des dessins annexés dans lesquels :
- la figure 1 illustre de façon schématique une partie d'un véhicule automobile comportant un boîtier avec un couvercle à charnière selon l'invention servant de goulotte pour le passage de câbles électriques.
- les figures 2A et 2B montrent plus en détail un boitier avec un couvercle à charnière selon un premier mode de réalisation de l'invention dans lequel la charnière comprend un corps de palier formé par deux pattes à œillet traversées par une barre de torsion.
- les figures 3A et 3B montrent plus en détail un boitier avec un couvercle à charnière selon un second mode de réalisation de l'invention dans lequel la charnière comprend un corps de palier en forme de U enroulé sur lui-même et dans lequel passe une barre de torsion.

### Description des modes de réalisation

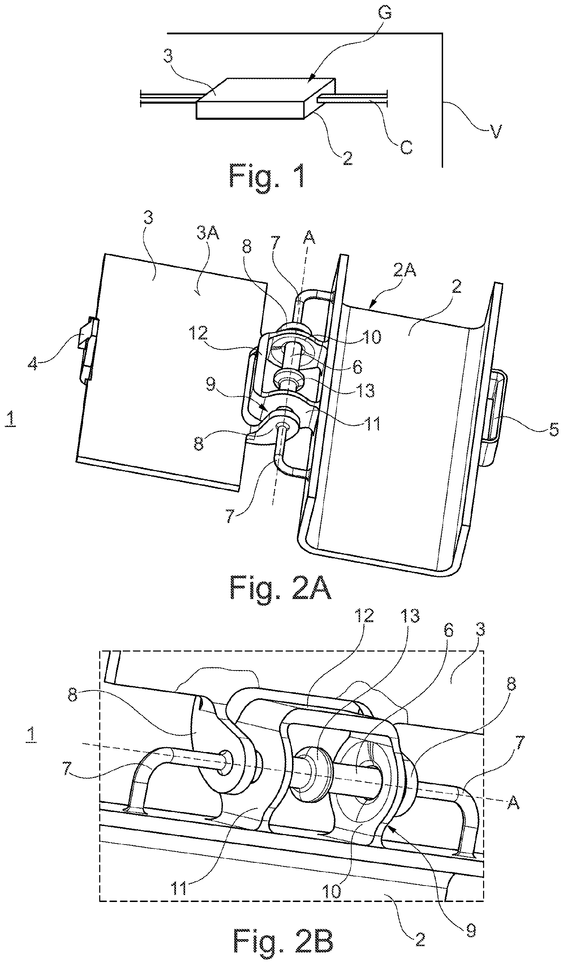

La figure 1 présente l'intérieur d'une partie d'un véhicule automobile V équipée d'un élément de goulotte G réunissant ici un faisceau de câbles C.

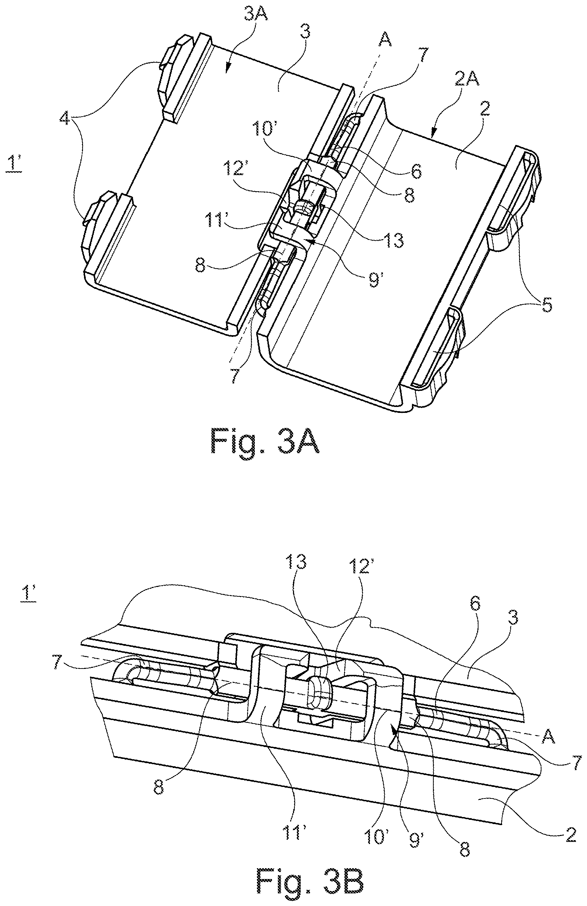

L'élément de goulotte G comporte un boitier 2 avec un couvercle 3 à charnière élastique monobloc non visible sur cette figure, cette charnière élastique pouvant être réalisée comme illustré sur les figures 2A, 2B suivant un premier mode de réalisation de l'invention ou comme illustré sur les figures 3A et 3B suivant un second mode de réalisation selon l'invention.

Dans la description qui suivra, les éléments communs aux deux modes de réalisation porteront les mêmes références.

Sur les figures 2A à 3B, l'ensemble de charnière indiqué par la référence 1 ou 1' comprend un premier élément 2A de charnière qui fait ici partie ici du boitier 2 et un second élément 3A de charnière qui fait partie ici du couvercle 3.

Le couvercle 3 pivote sur le boitier 2 et un loquet 4, ici présent sur le couvercle 3 se trouve, en coïncidence avec un verrou 5, ici sur le boitier 2, pour verrouiller le couvercle 3 sur le boiter 2.

L'ensemble de charnière 1, 1' selon l'invention comprend une barre de torsion 6 élastique qui s'étend selon un axe A entre le premier élément 2A de charnière et le second élément 3A de charnière.

Comme visible sur les figures, la barre de torsion 6 présente deux extrémités ici coudées 7 raccordées au premier élément 2A de charnière sur le boitier 2.

Le second élément 3A de charnière sur le couvercle 3 présente ici deux bras de sollicitation 8 espacés l'un de l'autre selon la direction axiale A et qui sont solidaires en rotation à la barre de torsion 6.

Selon un premier mode de réalisation de l'élément de charnière 1 selon l'invention montré sur les figures 2A et 2B, il est prévu entre les deux bras de sollicitation 8 un corps de palier 9 formé de deux pattes 10, 11 à œillet reliées ici par une nervure de renfort 12 en matière plastique formant un pont entre les deux pattes 10, 11.

Comme visible sur les figures 2A et 2B, les deux pattes 10, 11 à œillet sont espacées axialement l'une de l'autre entre les deux bras de sollicitation 8 et sont traversées par la partie médiane de la barre de torsion 6 qui peut tourner librement dans les œillets des pattes 10,11.

Par ailleurs, les deux pattes 10, 11 à œillets sont assez rapprochées respectivement des deux bras de sollicitation 8 de telle façon à éviter un jeu axial trop important du corps de palier 9 entre les deux bras de sollicitation 8 si la barre de torsion 6 est rompue par exemple à une de ses extrémités coudées 7.

Comme visible sur les figures 2A, 2B, la barre de torsion 6 présente une section dans sa partie médiane qui est plus grande que la section de la barre de torsion 6 à ses extrémités coudées 7, le changement de section intervenant au niveau de chaque bras de sollicitation 8.

Par ailleurs, il est prévu que la partie médiane de la barre de torsion 6 présente en son centre un renflement 13 en forme d'olive avec un diamètre extérieur plus grand que le diamètre intérieur d'un œillet des pattes 10, 11.

Ce renflement 13 en forme d'olive empêche le dégagement de la barre de torsion 6 des pattes 10, 11 à œillet.

Suivant le second mode de réalisation de l'invention, l'élément de charnière 1' montré sur les figures 3A et 3B comporte ici un corps de palier 9' constitué par une boucle de matière formant un U qui est enroulé sur lui-même. Plus particulièrement les deux branches 10', 11' du U sont repliées sur elles mêmes pour former avec la base 12' du U un canal dans lequel s'étend axialement la barre de torsion 6.

Les deux branches 10' et 11' du U sont disposées sans jeu axial trop important entre les deux bras de sollicitation 8.

Sur les figures 3A et 3B, on a représenté le renflement 13 en forme d'olive au milieu de la partie médiane de la barre de torsion 6 qui présente une grande section.

Selon l'invention, lors du basculement du couvercle 3 sur le boitier 2 par un mouvement de rotation par rapport à l'axe A, les bras de sollicitation 8 sollicitent élastiquement en rotation la barre de torsion 6 laquelle se vrille à ses extrémités coudées 7 mais peut tourner librement dans le corps de palier 9, 9'.

Avantageusement, si sous influence mécanique, la barre de torsion 6 vrillée casse au niveau de l'une ou l'autre des extrémités coudées 7, l'ensemble de charnière 1, 1' reste d'une seule pièce grâce au maintien de la barre de torsion 6 dans le corps de palier 9, 9'.

Ainsi, selon l'invention, même en cas de casse de la barre de torsion 6, le loquet 4 du couvercle 3 peut être mis correctement en coïncidence avec l'ouverture 5 du boitier 2.

L'ensemble de charnière 1, 1' monobloc selon l'invention, peut être réalisé en matière plastique, par exemple par moulage par injection ou par impression 3D.

## Revendications

1. Ensemble de charnière (1, 1') monobloc à barre de torsion élastique comprenant un premier élément (2A) de charnière, un second élément (3A) de charnière et une barre de torsion (6) qui s'étend axialement entre ledit premier élément (2A) de charnière et ledit second élément (3A) de charnière, ladite barre de torsion (6) ayant deux extrémités (7) raccordées audit premier élément (2A) de charnière et ledit second élément (3A) de charnière présentant deux bras de sollicitation (8) espacés l'un de l'autre selon ladite direction axiale qui sont solidaires en rotation à ladite barre de torsion (6), **caractérisé en ce que** ledit premier élément (2A) de charnière comprend un corps de palier (9, 9') qui s'étend entre lesdits deux bras de sollicitation (8) et qui est traversé par une partie médiane de ladite barre de torsion (6).

2. Ensemble de charnière (1) selon la revendication 1, **caractérisé en ce que** ledit corps de palier (9) comprend deux pattes (10, 11) à œillet espacées axialement l'une de l'autre entre lesdits deux bras de sollicitation (8), ladite partie médiane de ladite barre de torsion (6) tournant librement dans lesdites deux pattes (10, 11) à œillet.

3. Ensemble de charnière (1) selon la revendication 2, **caractérisé en ce que** lesdites deux pattes (10, 11) à œillet sont raccordées l'une à l'autre par une nervure de renfort (12).

4. Ensemble de charnière (1') selon la revendication 1, **caractérisé en ce que** ledit corps de palier (9') comprend une boucle de matière formant un U (10', 11', 12') enroulé sur lui-même entre lesdits deux bras de sollicitation (8) pour former un canal dans lequel tourne librement ladite partie médiane de ladite barre de torsion (6).

5. Ensemble de charnière (1, 1') selon l'une des revendications précédentes, **caractérisé en ce que** ladite partie médiane de ladite barre de torsion (6) présente une section plus grande qu'à ses extrémités (7).

6. Ensemble de charnière (1, 1') selon l'une des revendications précédentes, **caractérisé en ce que** ladite partie médiane de ladite barre de torsion (6) présente un renflement (13) en forme d'olive.

7. Ensemble de charnière (1, 1') selon l'une des revendications précédentes, **caractérisé en ce que** ledit corps de palier (9, 9') est formé d'une seule pièce avec ladite barre de torsion (6).

8. Boitier (2) avec un couvercle (3) à charnière, **caractérisé en ce que** ledit boitier (2) et ledit couvercle (3) sont reliés par un ensemble de charnière (1, 1') selon l'une des revendications précédentes.

## Patentansprüche

1. Einteilige Scharniereinheit (1, 1') mit elastischem Torsionsstab, umfassend ein erstes Scharnierelement (2A), ein zweites Scharnierelement (3A) und einen Torsionsstab (6), der sich axial zwischen dem ersten Scharnierelement (2A) und dem zweiten Scharnierelement (3A) erstreckt, wobei der Torsionsstab (6) zwei mit dem ersten Scharnierelement (2A) verbundene Enden (7) aufweist und wobei das zweite Scharnierelement (3A) zwei jeweils voneinander gemäß der axialen Richtung beabstandete Belastungsarme (8) aufweist, die drehfest mit dem Torsionsstab (6) sind,
**dadurch gekennzeichnet,**
**dass** das erste Scharnierelement (2A) einen Lagerkorpus (9, 9') umfasst, der sich zwischen den beiden Belastungsarmen (8) erstreckt und der von einem mittleren Teil des Torsionsstabs (6) durchsetzt ist.

2. Scharniereinheit (1) nach Anspruch 1, **dadurch gekennzeichnet, dass** der Lagerkorpus (9) zwei Laschen (10, 11) mit Auge, die axial beabstandet die eine von der anderen zwischen den beiden Belastungsarmen (8) vorgesehen sind, umfasst, wobei der mittlere Teil des Torsionsstabs (6) frei in den beiden Laschen (10, 11) mit Auge dreht.

3. Scharniereinheit (1) nach Anspruch 2, **dadurch gekennzeichnet, dass** die zwei Laschen (10, 11) mit Auge die eine mit der anderen durch einen Verstärkungssteg (12) verbunden sind.

4. Scharniereinheit (1') nach Anspruch 1, **dadurch gekennzeichnet, dass** der Lagerkorpus (9') zwischen den beiden Belastungsarmen (8) eine ein auf sich selbst gerolltes U (10', 11', 12') bildende Schlaufe aus Material umfasst zum Bilden eines Kanals, in welchem der mittlere Teil des Torsionsstabs (6) frei dreht.

5. Scharniereinheit (1, 1') nach einem der vorhergehenden Ansprüche,
**dadurch gekennzeichnet, dass** der mittlere Teil des Torsionsstabs (6) einen größeren Querschnitt als an seinen Enden (7) aufweist.

6. Scharniereinheit (1, 1') nach einem der vorhergehenden Ansprüche, **dadurch gekennzeichnet, dass** der mittlere Teil des Torsionsstabs (6) eine Verdickung (13) in Olivenform aufweist.

7. Scharniereinheit (1, 1') nach einem der vorhergehenden Ansprüche, **dadurch gekennzeichnet, dass** der Lagerkorpus (9, 9') aus einem einzigen Stück mit dem Torsionsstab (6) gebildet ist.

8. Gehäuse (2) mit einem Deckel (3) mit Scharnier, **dadurch gekennzeichnet, dass** das Gehäuse (2) und der Deckel (3) durch eine Scharniereinheit (1, 1') nach einem der vorhergehenden Ansprüche verbunden sind.

## Claims

1. A one-piece hinge assembly (1, 1') with a resilient torsion bar, comprising a first hinge element (2A), a second hinge element (3A), and a torsion bar (6) that extends axially between said first hinge element (2A) and said second hinge element (3A), said torsion bar (6) having two ends (7) connected to said first hinge element (2A), and said second hinge element (3A) presenting two load arms (8) that are spaced apart from each other in said axial direction and that are constrained to pivot with said torsion bar (6), the hinge assembly being **characterized in that** said first hinge element (2A) comprises a bearing body (9, 9') that extends between said two load arms (8) and through which a middle portion of said torsion bar (6) passes.

2. A hinge assembly (1) according to claim 1, **characterized in that** said bearing body (9) comprises two eyelet tabs (10, 11) that are spaced apart from each other axially between said two load arms (8), said middle portion of said torsion bar (6) being free to turn in said two eyelet tabs (10, 11).

3. A hinge assembly (1) according to claim 2, **characterized in that** said two eyelet tabs (10, 11) are connected to each other by a reinforcing strip (12).

4. A hinge assembly (1') according to claim 1, **characterized in that** said bearing body (9') comprises a rolled-up loop of material forming a U-shape (10', 11', 12') between said two load arms (8) in order to form a channel in which said middle portion of said torsion bar (6) is free to turn.

5. A hinge assembly (1, 1') according to any preceding claim, **characterized in that** said middle portion of said torsion bar (6) presents a cross-section that is larger than at its ends (7).

6. A hinge assembly (1, 1') according to any preceding claim, **characterized in that** said middle portion of said torsion bar (6) presents an olive-shaped bulge (13).

7. A hinge assembly (1, 1') according to any preceding claim, **characterized in that** said bearing body (9, 9') is formed integrally with said torsion bar (6).

8. A casing (2) with a hinged cover (3), **characterized in that** said casing (2) and said cover (3) are connected together by a hinge assembly (1, 1') according to any preceding claim.
